(19) Europäisches Patentamt
European Patent Office
Office européen des brevets

(11) **EP 3 093 360 A1**

(12) **EUROPEAN PATENT APPLICATION**
published in accordance with Art. 153(4) EPC

(43) Date of publication:
**16.11.2016 Bulletin 2016/46**

(51) Int Cl.:
*C22C 38/00* (2006.01)  *B21D 22/20* (2006.01)
*C21D 1/18* (2006.01)  *C21D 9/00* (2006.01)
*C22C 38/58* (2006.01)

(21) Application number: **14876941.7**

(22) Date of filing: **06.01.2014**

(86) International application number:
**PCT/JP2014/050019**

(87) International publication number:
**WO 2015/102048 (09.07.2015 Gazette 2015/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Nippon Steel & Sumitomo Metal
Corporation
Tokyo 100-8071 (JP)**

(72) Inventors:
• **HAYASHI Koutarou
Tokyo 100-8071 (JP)**
• **NISHIBATA Toshinobu
Tokyo 100-8071 (JP)**

(74) Representative: **Vossius & Partner
Patentanwälte Rechtsanwälte mbB
Siebertstrasse 3
81675 München (DE)**

(54) **HOT-FORMED MEMBER AND PROCESS FOR MANUFACTURING SAME**

(57)    A hot-formed member according to the present invention has a predetermined chemical composition, a metallographic microstructure in which, in terms of area%, ferrite is 10% to 90%, unrecrystallized ferrite is 0% to 2.0%, martensite is 10% to 90%, the total area ratio of the ferrite and the martensite is 90% to 100%, and the average grain size of the ferrite is 0.5 $\mu$m to 5.0 $\mu$m, and the tensile strength of 900 MPa to 1800 MPa.

FIG. 1

BASE STEEL SHEET

HEATING — HEATING STEP

MAINTAINING TEMPERATURE — HOLDING STEP

HOT PRESSING (HOT FORMING) — HOT FORMING STEP

COOLING — COOLING STEP

HOT-FORMED MEMBER

**Description**

[Technical Field of the Invention]

The present invention relates to a hot-formed member for use in machine structural components such as structural components for the body of an automobile, and a method of manufacturing the hot-formed member. Specifically, the invention relates to a hot-formed member which has excellent ductility and impact resistance while having a tensile strength of 900 MPa or more, and a method of manufacturing the hot-formed member.

[Related Art]

In recent years, there has been a lot of effort to improve the strength of steel used in the bodies of automobiles in order to reduce the use weight of the steel. As for steel sheets widely used in technical fields related to automobiles, press formability decreases with an increase in the strength of the steel sheet, and it becomes difficult to manufacture a member having a complicated shape. Specifically, there is a problem in that since the ductility of the steel sheet decreases with an increase in the strength of the steel sheet, breaking occurs in a region having a high working degree in the member, and/or the spring-back and the wall camber of the member increase, and thus the shape accuracy of the member deteriorates. Accordingly, it is not easy to manufacture a member having a complicated shape by applying press forming to a steel sheet having a high strength, particularly, a tensile strength of 900 MPa or more. It is possible to work a steel sheet having a high strength by roll forming, not by press forming. However, roll forming can be applied only to a method of manufacturing a member having a uniform cross-section in a longitudinal direction.

As shown in Patent Document 1, a member having a complicated shape can be formed with high shape accuracy from a high-strength steel sheet in a method called hot pressing for press-forming a heated steel sheet. This is because, in the hot pressing process, the steel sheet is formed in a state of being heated at a high temperature, and thus the steel sheet during working is soft and has high ductility. Furthermore, in the hot pressing, by heating the steel sheet in an austenite single phase region before the pressing, and rapidly cooling (hardened) the steel sheet in a die after the pressing, it is possible to achieve an increase in the strength of the member due to martensitic transformation. Accordingly, the hot pressing method is an excellent forming method capable of simultaneously securing an increase in the strength of a member and the formability of a steel sheet.

Patent Document 2 discloses a pre-press quenching method in which a steel sheet is previously formed into a predetermined shape at room temperature, and a member obtained is heated to an austenite region and rapidly cooled in a die to achieve an increase in the strength of the member. In the pre-press quenching method which is an aspect of hot pressing, the deformation of the member due to distortion by heating can be suppressed by restraining the member with the die. The pre-press quenching method is an excellent forming method capable of increasing the strength of the member and of obtaining high shape accuracy.

However, in recent years, there has also been a demand for hot-formed members to have ductility, and there is a problem in that in the related art represented by Patent Documents 1 and 2 in which the metallographic microstructure is substantially a martensite single phase, it is not possible to meet such a demand.

Patent Document 3 discloses a member which is regarded to be excellent in ductility and have a dual phase microstructure including ferrite and martensite by heating a steel sheet having the C content limited to 0.1% or less in an austenite single phase region and by performing hot pressing. In this manner, when the steel sheet is heated in an austenite single phase region, the member has a uniform metallographic microstructure. However, as is obvious from the description of examples of Patent Document 3, the C content is limited to 0.1% or less in the member described in Patent Document 3, and thus the tensile strength of the member is at most 700 MPa. Therefore, the member does not have a sufficient strength for contributing to a reduction in the weight of an automobile.

Patent Document 4 discloses a member which has a tensile strength of 980 MPa or more and excellent ductility and which has a dual phase microstructure, specifically, a two phase microstructure of ferrite and martensite by heating a steel sheet having a large amount of Cr added thereto to an austenite single phase region, to transform a part of the austenite into ferrite before or after pressing. However, when using steel having a large amount of Cr added thereto as disclosed in Patent Document 4, carbide such as cementite and $M_{23}C_6$ formed in the steel is poorly solid-soluble during heating, and thus it is necessary to perform heating for a long period of time to secure stable mechanical properties. Furthermore, since a long period of time is required for the ferritic transformation, a new manufacturing process in which holding is performed for a long period of time is needed after heating to an austenite single phase region in order to form the two phase microstructure. Accordingly, the method described therein is a method which significantly impairs productivity in addition to an increase in the cost for the manufacturing of the hot-formed member, and is not suitable as a mass production technology.

Patent Documents 5 to 7 disclose members which has a high strength and excellent ductility with a two phase microstructure of ferrite and martensite and in which each of the ferrite and the martensite has an average grain size of

7 $\mu$m or less by heating a cold-rolled steel sheet having an average grain size (average grain size of ferrite, or in the case in which a second phase is further included, average grain size of ferrite and the second phase) of 15 $\mu$m or less to form a two phase microstructure of ferrite and austenite, pressing the cold rolled steel sheet while maintaining the microstructure, and rapidly cooling the cold rolled steel sheet in a die.

[Prior Art Documents]

[Patent Documents]

[Patent Document 1] British Patent Publication No. 1490535
[Patent Document 2] Japanese Unexamined Patent Application, First Publication No. H10-96031
[Patent Document 3] Published Japanese Translation No. 2010-521584 of the PCT International Publication
[Patent Document 4] Japanese Unexamined Patent Application, First Publication No. 2010-131672
[Patent Document 5] Japanese Unexamined Patent Application, First Publication No. 2010-65293
[Patent Document 6] Japanese Unexamined Patent Application, First Publication No. 2010-65292
[Patent Document 7] Japanese Unexamined Patent Application, First Publication No. 2010-65295

[Disclosure of the Invention]

[Problems to be Solved by the Invention]

As described in Patent Documents 5 to 7, the metallographic microstructure of the steel sheet subjected to hot pressing has an influence on the metallographic microstructure of the hot-formed member. Particularly, as shown in Patent Documents 5 to 7, making a fine metallographic microstructure is an important microstructure control method contributing to an improvement in the ductility of the member.
The inventors have newly found that the impact resistance of the member can be improved by refining and uniformizing the microstructure of the steel sheet to be subjected to hot forming. The inventors have further found that in order to refine and uniformize the microstructure of the steel sheet to be subjected to hot forming, it is required that the hot-rolled steel sheet is cold-rolled and is annealed at a recrystallization temperature.
Regarding this, in the methods disclosed in Patent Documents 5 to 7, the annealing temperature is controlled to be near an $Ac_1$ temperature in order to refine the microstructure of the steel sheet to be subjected to hot pressing. According to the knowledge of the inventors, a large amount of unrecrystallized ferrite remains in the steel sheet subjected to hot pressing under such manufacturing conditions. Since the unrecrystallized ferrite is not recrystallized even when heated in a two phase temperature range in which ferrite and austenite coexist, the microstructure after hot pressing is extremely non-uniform. In addition, the methods disclosed in Patent Documents 5 to 7 also assume that the steel sheet contains a large amount of Ti. Since Ti acts to prevent the ferrite from being recrystallized, there is a concern that a large amount of unrecrystallized ferrite may remain when a large amount of Ti is contained. However, the technologies disclosed in Patent Documents 5 to 7 do not suggest any ideas for controlling the unrecrystallized ferrite. Accordingly, in the methods disclosed in Patent Documents 5 to 7, although the microstructure of the hot-formed member can be made fine and the ductility thereof can be improved, the impact resistance thereof is significantly insufficient.
As described above, a mass production technology that provides members which are manufactured by hot forming and have a tensile strength of 900 MPa or more and excellent ductility and impact resistance has not been established yet.
A specific object of the present invention is to provide a hot-formed member having excellent ductility and impact resistance and a tensile strength of 900 MPa or more, that could not be mass-produced in the past as described above, and a method of manufacturing the hot-formed member.

[Means for Solving the Problem]

The inventors have conducted an intensive study to improve the ductility and the impact resistance of a hot-formed member having a tensile strength of 900 MPa or more, and as a result, obtained novel knowledge that the ductility and the impact resistance of a hot-formed member are improved by (1) setting the Ti content in the hot-formed member to a limited range and (2) making the metallographic microstructure of the hot-formed member as a fine and uniform metallographic microstructure consisting of ferrite and martensite. In addition, the inventors have obtained novel knowledge that a hot-formed member having such a metallographic microstructure is achieved by using a steel sheet having the above-described chemical composition and having a fine and uniform metallographic microstructure as a steel sheet to be subjected to hot forming, and by adjusting the heat treatment conditions in the hot forming.

The present invention is contrived based on such knowledge, and the gist thereof is as follows.

(1) A hot-formed member according to an aspect of the present invention has a chemical composition containing, by mass%: 0.10% to 0.40% of C; 0% to 2.0% of Si; 1.0% to 3.0% ofMn; 0.05% or less ofP; 0.01% or less of S; 0.001% to 1.0% of sol. Al; 0.050% to 0.30% of Ti; 0.01% or less of N; 0% to 0.4% of Nb; 0% to 0.4% of V; 0% to 1.0% of Cr; 0% to 1.0% of Mo; 0% to 1.0% of Cu; 0% to 1.0% of Ni; 0% to 0.01% of Ca; 0% to 0.01% of Mg; 0% to 0.01% of REM; 0% to 0.01% of Zr; 0% to 0.01% of B; 0% to 0.01% of Bi; and the balance of Fe and impurities, wherein the hot-formed member has a metallographic microstructure which has, in terms of area%, 10% to 90% of a ferrite, 0% to 2.0% of an unrecrystallized ferrite, 10% to 90% of a martensite is, in which a total area ratio of the ferrite and the martensite is 90% to 100%, and in which an average grain size of the ferrite is 0.5 $\mu$m to 5.0 $\mu$m, and a tensile strength is 900 MPa to 1800 MPa.

(2) In the hot-formed member according to (1), the chemical composition may contain, by mass%, one or two or more selected from the group consisting of 0.003% to 0.4% ofNb, 0.003% to 0.4% of V, 0.005% to 1.0% of Cr, 0.005% to 1.0% of Mo, 0.005% to 1.0% of Cu, and 0.005% to 1.0% of Ni.

(3) In the hot-formed member according to (1) or (2), the chemical composition may contain, by mass%, one or two or more selected from the group consisting of 0.0003% to 0.01% of Ca, 0.0003% to 0.01% of Mg, 0.0003% to 0.01% of REM, and 0.0003% to 0.01% of Zr.

(4) In the hot-formed member according to any one of (1) to (3), the chemical composition may contain, by mass%, 0.0003% to 0.01% of B.

(5) In the hot-formed member according to any one of (1) to (4), the chemical composition may contain, by mass%, 0.0003% to 0.01% of Bi.

(6) A method of manufacturing a hot-formed member according to another aspect of the present invention includes: heating a base steel sheet having the same chemical composition as that of the hot-formed member according to any one of (1) to (5) and a metallographic microstructure in which the amount of an unrecrystallized ferrite is 0 area% to 2.0 area% and an average grain size of a ferrite is 0.5 $\mu$m to 7.0 $\mu$m to a temperature range of 720°C to lower than an Ac$_3$ temperature; then maintaining a temperature of the base steel sheet for 1 minute to 20 minutes in the temperature range of 720°C to lower than the Ac$_3$ temperature; then hot-forming the base steel sheet; and then cooling the base steel sheet under the conditions in which an average cooling rate is 20°C/sec to 500°C/sec in a temperature range of 600°C to 150°C.

(7) A method of manufacturing a hot-formed member according to still another aspect of the present invention includes: heating a base steel sheet having the same chemical composition as that of the hot-formed member according to any one of (1) to (5) and a metallographic microstructure in which an unrecrystallized ferrite is more than 2.0 area% and an average grain size of a ferrite is 0.5 $\mu$m to 7.0 $\mu$m to a temperature range of an Ac$_3$ temperature to the Ac$_3$ temperature + 100°C; then maintaining a temperature of the base steel sheet for 30 seconds or longer and shorter than 20 minutes in the temperature range of the Ac$_3$ temperature to the Ac$_3$ temperature + 100°C; then hot-forming the base steel sheet; and then cooling the base steel sheet under the conditions in which an average cooling rate is 3°C/sec to 20°C/sec in a temperature range of the Ac$_3$ temperature to 600°C.

(8) In the method of manufacturing a hot-formed member according to (7) or (8), the base steel sheet may be one selected from the group consisting of a cold-rolled steel sheet, a hot-dip galvanized steel sheet, and a galvannealed steel sheet.

[Effects of the Invention]

According to the present invention, technically valuable effects such that practical application of a hot-formed member having excellent ductility and impact resistance and a tensile strength of 900 MPa or more is achieved, and the first mass production of such a hot-formed member becomes possible.

[Brief Description of the Drawing]

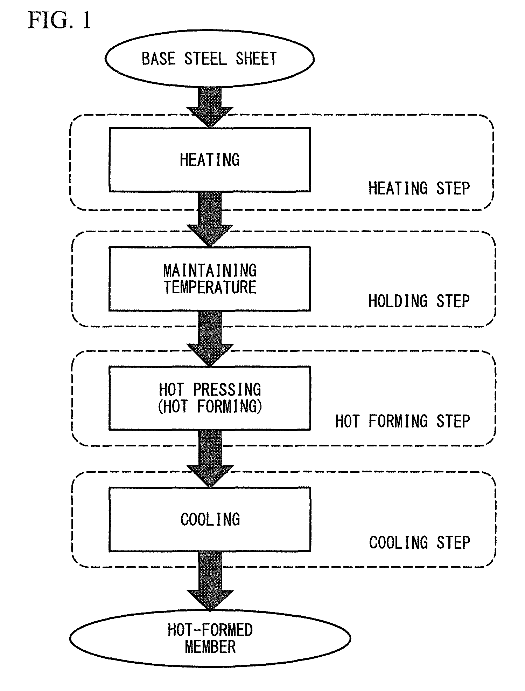

FIG. 1 is a flowchart illustrating a manufacturing method according to the present invention.

[Embodiments of the Invention]

Next, a hot-formed member and a method of manufacturing the hot-formed member according to an embodiment of the present invention, which have been achieved based on the above-described knowledge, will be described. In the following description, regarding hot forming, hot pressing that is a specific aspect thereof will be used as an example for description. However, when the substantially same manufacturing conditions as those disclosed in the following description are achieved, forming methods other than hot pressing, for example, roll forming and the like may be employed as a hot forming method. The tensile strength of the hot-formed member according to this embodiment is 900 MPa to 1800 MPa. In order to reduce the weights of machine structural components of automobiles and the like, the tensile strength of the material thereof is required to be set to 900 MPa or more. In addition, in order to prevent brittle fracture of a steel sheet from occurring, it is necessary to set the tensile strength to 1800 MPa or less. In this embodiment, such a tensile strength is achieved by appropriately controlling the amount of various alloy elements such as C and the manufacturing method.

1. Chemical Composition

First, the reasons why the chemical composition of a hot-formed member according to an embodiment of the present invention is specified as described above will be described. In the following description, the symbol "%" indicating the amount of each alloy element means "mass%" unless specifically noted. Since the chemical composition of steel does not change even when the steel is subjected to hot forming, the amount of the respective elements in a base steel sheet before hot forming is the same as that in a hot-formed member after hot forming.

(C: 0.10% to 0.40%)

C is a very important element which increases hardenability of steel and has the strongest influence on the strength after hardening. When the C content is less than 0.10%, it is difficult to secure a tensile strength of 900 MPa or more after hardening. Accordingly, the C content is set to 0.10% or more. In order to more securely obtain the above-described effects, the C content is preferably 0.11% or more. When the C content is more than 0.40%, the impact resistance of a hot-formed member may significantly deteriorate, and weldability of the hot-formed member may decrease. Accordingly, the C content is set to 0.40% or less. The C content is preferably set to 0.28% or less from the viewpoint of weldability.

(Si: 0% to 2.0%)

The hot-formed member according to this embodiment does not essentially contain Si. Accordingly, the lower limit of the Si content is 0%. However, Si is an element which acts to increase the strength after hardening while not deteriorating or improving ductility. When the Si content is less than 0.001%, it is difficult to obtain the above-described actions. Accordingly, in order to obtain the above-described effects, the Si content may be set to 0.001% or more. When the Si content is set to 0.05% or more, ductility is further improved. Accordingly, the Si content is preferably set to 0.05% or more. When the Si content is more than 2.0%, the effects obtained by the above-described actions are saturated and economic disadvantages are caused. Moreover, surface properties significantly deteriorate. Accordingly, the Si content is set to 2.0% or less, and is preferably 1.5% or less.

(Mn: 1.0% to 3.0%)

Mn is a very effective element for increasing hardenability of steel and stably securing the strength after hardening. However, when the Mn content is less than 1.0% or less, the effects thereof cannot be sufficiently obtained, and it is very difficult to secure a tensile strength of 900 MPa or more after hardening. Accordingly, the Mn content is set to 1.0% or more. When the Mn content is 1.6% or more, a tensile strength of 980 MPa or more can be secured after hardening. Therefore, the Mn content is preferably set to 1.6% or more. When the Mn content is more than 3.0%, the hot-formed member has a non-uniform metallographic microstructure, and impact resistance significantly deteriorates. Accordingly, the Mn content is set to 3.0% or less. When a tensile strength of a base steel sheet before application of hot forming is reduced, productivity in a later hot forming process is improved. In order to obtain this effect, the Mn content is preferably set to 2.4% or less.

(P: 0.05% or Less)

In general, P is an impurity inevitably contained in steel. However, in this embodiment, since P acts to increase the strength of the hot-formed member by solid-solution strengthening, P may be actively contained. However, when the P content is more than 0.05%, weldability of the hot-formed member significantly deteriorates. Accordingly, the P content is set to 0.05% or less. In order to more securely prevent a deterioration in the weldability of the hot-formed member, the P content is preferably set to 0.02% or less. In addition, in order to more securely obtain the above-described actions, the P content is preferably set to 0.003% or more. However, even when the P content is 0%, necessary characteristics for solving the problems can be obtained. Therefore, it is not necessary to limit the lower limit of the P content.

That is, the lower limit of the P content is 0%.

(S: 0.01% or Less)

S is an impurity contained in steel. The S content is preferably as small as possible in order to improve weldability. When the S content is more than 0.01%, the weldability is unacceptably significantly deteriorated. Accordingly, the S content is set to 0.01% or less. In order to more securely prevent the deterioration in the weldability, the S content is preferably set to 0.003% or less, and more preferably 0.0015% or less. Since the S content is preferably as small as possible, it is not necessary to specify the lower limit of the S content. That is, the lower limit of the S content is 0%.

(sol. Al: 0.001% to 1.0%)

sol. Al indicates solid solution Al existing in a solid solution state in steel. Al is an element acting to deoxidize steel, and is an element which prevents a carbonitride forming element such as Ti from being oxidized to promote the formation of carbonitride. Due to these actions, generation of surface defects on the steel can be suppressed, and the yield of the steel can be improved. When the sol. Al content is less than 0.001%, it is difficult to obtain the above-described actions. Accordingly, the sol. Al content is set to 0.001% or more. In order to more securely obtain the above-described actions, the sol. Al content is preferably set to 0.015% or more. When the sol. Al content is more than 1.0%, weldability of the hot-formed member significantly decreases, and the amount of oxide-based inclusions increases in the hot-formed member, whereby surface properties of the hot-formed member significantly deteriorate. Accordingly, the sol. Al content is set to 1.0% or less. In order to more securely avoid the above-described phenomenon, the sol. Al content is preferably 0.080% or less.

(Ti: 0.050% to 0.30%)

Ti is an important element in this embodiment. Since fine precipitates that are Ti carbide, Ti nitride, and/or Ti carbonitride are formed in the hot-formed member when Ti is contained, the metallographic microstructure after hardening can be made fine, and whereby the ductility of the hot-formed member is significantly improved. When the Ti content is less than 0.050%, the metallographic microstructure after hardening is not made fine, and thus the ductility cannot be improved. Accordingly, the Ti content is set to 0.050% or more. The Ti content is preferably 0.070% or more. When the Ti content is more than 0.30%, coarse carbonitride is formed during casting and during hot rolling, and thus the impact resistance of the hot-formed member significantly deteriorates. Accordingly, the Ti content is set to 0.30% or less. The Ti content is preferably 0.25% or less, and more preferably 0.20% or less.

(N: 0.01% or Less)

N is an impurity contained in steel. In order to improve weldability, the N content is preferably as small as possible. When the N content is more than 0.01%, the weldability of the hot-formed member is unacceptably significantly deteriorated. Accordingly, the N content is set to 0.01% or less. In order to more securely avoid the deterioration in the weldability, the N content is preferably 0.006% or less. Since the N content is preferably as small as possible, it is not necessary to specify the lower limit of the N content. That is, the lower limit of the N content is 0%.

The chemical composition of the hot-formed member according to this embodiment includes the balance of Fe and impurities. The impurities mean components that are incorporated from raw materials such as ore or scrap, or due to various factors in the manufacturing process in the industrial manufacturing of steel, and are permitted within a range in which this embodiment is not affected. However, the hot-formed member according to this embodiment may further contain, as arbitrary components, elements described below. Since necessary characteristics for solving the problems can be obtained even when the arbitrary elements to be described below are not contained in the hot-formed member, it is not necessary to limit the lower limit of the amount of the arbitrary elements. That is, the lower limit of the amount of each arbitrary element is 0%.

(One or Two or More Selected from Group Consisting of 0% to 0.4% of Nb, 0% to 0.4% of V, 0% to 1.0% of Cr, 0% to 1.0% of Mo, 0% to 1.0% of Cu, and 0% to 1.0% of Ni)

All these elements are effective elements for increasing hardenability of steel and stably securing the strength of the hot-formed member after hardening. Accordingly, one or two or more of these elements may be contained in the hot-formed member. However, when Nb and V are contained in an amount of more than 0.4%, respectively, it is difficult to perform hot rolling and cold rolling in the manufacturing process. Furthermore, when Nb and V are contained in an amount of more than 0.4%, respectively, the hot-formed member after hardening is likely to have a non-uniform microstructure, and thus the impact resistance of the hot-formed member significantly deteriorates. In addition, when Cr, Mo, Cu, and Ni are contained in an amount of more than 1.0%, respectively, the effects obtained by the above-described actions are saturated and economic disadvantages are caused. Moreover, it is difficult to perform hot rolling and cold rolling in the manufacturing process. In order to more securely obtain the effects caused by the above-described actions, at least one of 0.003% or more of Nb, 0.003% or more of V, 0.005% or more of Cr, 0.005% or more of Mo, 0.005% or more of Cu, and 0.005% or more of Ni is preferably contained.

(One or Two or More Selected from Group Consisting of 0% to 0.01% of Ca, 0% to 0.01% of Mg, 0% to 0.01% of REM, and 0% to 0.01% of Zr)

All these elements are elements contributing to control of inclusions, particularly, fine dispersion of inclusions, and acting to increase low-temperature toughness of the hot-formed member. Accordingly, one or two or more of these elements may be contained. However, when any of these elements is contained in an amount of more than 0.01%, surface properties of the hot-formed member may deteriorate. Accordingly, in a case in which the elements are contained, the amount of each element is set as described above. In order to more securely obtain the effects caused by the above-described actions, the amount of each element to be added is preferably set to 0.0003% or more.

Here, the term "REM" indicates total 17 elements including Sc, Y, and lanthanoid, and the "REM content" means the total amount of these 17 elements. In the case in which lanthanoid is used as REM, the REM is industrially added in the form of misch metal.

(B: 0% to 0.01%)

B is an element acting to increase low-temperature toughness of the hot-formed member. Accordingly, B may be contained in the hot-formed member. However, when B is contained in an amount of more than 0.01%, the hot workability of a base steel sheet deteriorates, and it becomes difficult to perform hot rolling. Accordingly, in a case in which B is contained in the hot-formed member, the B content is set to 0.01% or less. In order to more securely obtain the effects caused by the above-described actions, the B content is preferably set to 0.0003% or more.

(Bi: 0% to 0.01%)

Bi is an element uniformizing the metallographic microstructure of the hot-formed member and acting to increase impact resistance of the hot-formed member. Accordingly, Bi may be contained in the hot-formed member. However, when Bi is contained in an amount of more than 0.01%, hot workability of a base steel sheet deteriorates, and it becomes difficult to perform hot rolling. Accordingly, in the case in which Bi is contained in the hot-formed member, the Bi content is set to 0.01% or less. In order to more securely obtain the effects caused by the above-described actions, the Bi content is preferably set to 0.0003% or more.

2. Metallographic Microstructure of Hot-Formed Member

Next, the metallographic microstructure of the hot-formed member according to this embodiment will be described. In the following description, the symbol "%" indicating the amount of each metallographic microstructure means "area%" unless specifically noted.

The configuration of the metallographic microstructure to be described below is the configuration at approximately 1/2t to 1/4t of a sheet thickness, and not in a central segregation portion. The central segregation portion may have a different metallographic microstructure from a representative metallographic microstructure of steel. However, the central segregation portion is a very small region with respect to the entire sheet thickness, and has little influence on the mechanical properties of the steel. That is, the metallographic microstructure of the central segregation portion does not represent the metallographic microstructure of the steel. Accordingly, the metallographic microstructure of the hot-formed member according to this embodiment is specified at approximately 1/2t to 1/4t of the sheet thickness and not in the central segregation portion. The "position at 1/2t" indicates a position at a depth of 1/2 of a thickness t of the member from a surface of the hot-formed member, and the "position at 1/4t" indicates a position at a depth of 1/4 of the thickness t of the member from the surface of the hot-formed member.

In this embodiment, ferrite plastically deformed by rolling, elongated in a rolling direction, and then remaining without being recrystallized is called "unrecrystallized ferrite". In this embodiment, ferrite other than the unrecrystallized ferrite is called "ferrite" or "normal ferrite". The term "unrecrystallized ferrite" is a term well known to those skilled in the art. The normal ferrite includes recrystallized ferrite generated by recrystallization and transformed ferrite generated by phase transformation and the like.

In grains of the unrecrystallized ferrite, crystal orientation continuously changes due to the plastic deformation by rolling. The crystal orientation in grains of the normal ferrite is almost uniform, and crystal orientations between the normal ferrite grains adjacent to each other are different from each other. Due to such a difference, the unrecrystallized ferrite has higher hardness than the normal ferrite.

Since the unrecrystallized ferrite has a shape elongated in the rolling direction, the unrecrystallized ferrite and the normal ferrite can be discriminated from each other by observing the metallographic microstructures with a microscope. In addition, since the unrecrystallized ferrite and the normal ferrite are different in the state of the crystal orientation, the unrecrystallized ferrite and the normal ferrite can be discriminated from each other by analyzing crystal orientation measurement data of an electron back scattering pattern (EBSP) of the metallographic microstructure through a kernel average misorientation method (KAM method). In this embodiment, ferrite with an aspect ratio of 4 or more is the unrecrystallized ferrite, and ferrite with an aspect ratio of less than 4 is normal ferrite.

(Area Ratio of Ferrite: 10% to 90%)

When the area ratio of the ferrite is less than 10%, the grains of the ferrite are not adjacent to each other. That is, most ferrite grains are isolated, and the ductility of the hot-formed member cannot be improved. Accordingly, the area ratio of the ferrite is set to 10% or more. When the area ratio of the ferrite is more than 90%, the area ratio of the martensite is less than 10%, and as will be described later, it is difficult to secure a tensile strength of 900 MPa or more after hardening. Accordingly, the area ratio of the ferrite is set to 90% or less. The ratio between the ferrite and the martensite is not particularly limited as long as the area ratio of the ferrite is within the above-described range. However, the ferrite is preferably 25% to 85%, and the martensite is preferably 15% to 75%.

(Area Ratio of Unrecrystallized Ferrite: 0% to 2.0%)

When the unrecrystallized ferrite remains in the metallographic microstructure of the hot-formed member, the strength of the hot-formed member after hardening increases, however, since the metallographic microstructure is extremely non-uniform, the ductility and the impact resistance of the hot-formed member extremely deteriorate. Specifically, in the case in which the area ratio of the unrecrystallized ferrite is more than 2.0%, desired ductility and impact resistance cannot be obtained. Accordingly, the area ratio of the unrecrystallized ferrite of the hot-formed member is set to 2.0% or less (including 0%).

(Area Ratio of Martensite: 10% to 90%)

The strength of the hot-formed member after hardening can be increased by forming the martensite in the metallographic microstructure of the hot-formed member. When the area ratio of the martensite is less than 10%, it is difficult to secure a tensile strength of 900 MPa or more after hardening. Accordingly, the area ratio of the martensite is set to 10% or more. When the area ratio of the martensite is more than 90%, the area ratio of the ferrite (recrystallized ferrite) is less than 10%, and as described above, the ductility cannot be improved. Accordingly, the area ratio of the martensite is set to 90% or less.

(Total Area Ratio of Ferrite and Martensite: 90% to 100%)

The hot-formed member according to this embodiment has a metallographic microstructure mainly including ferrite and martensite. However, in accordance with manufacturing conditions, one or two or more of bainite, residual austenite, cementite, and pearlite may be incorporated in the metallographic microstructure as a phase or microstructure other than the ferrite and the martensite. In this case, when the area ratio of the phase or metallographic microstructure other than the ferrite and the martensite is more than 10%, target mechanical properties may not be obtained due to the influence of these phases or metallographic microstructures. Accordingly, the area ratio of the phase or microstructure other than the ferrite and the martensite is less than 10%. That is, the total area ratio of the ferrite and the martensite is set to 90% or more. Since it is not necessary to specify the upper limit of the total area ratio of the ferrite and the martensite, the upper limit of the total area ratio of the ferrite and the martensite is 100%.

The method of measuring the area ratio of each phase in the metallographic microstructure is well known to those skilled in the art, and can be measured using a conventional method in this embodiment. As will be shown later in examples, in this embodiment, test pieces are prepared from the hot-formed member in a direction in which a base steel sheet that is a raw material of the hot-formed member is rolled and in a direction perpendicular to the rolling direction. Next, metallographic microstructures of a cross-section in the rolling direction and a cross-section perpendicular to the rolling direction in the test piece are photographed by an electron microscope. Electron micrographs of regions of 800 $\mu$m x 800 $\mu$m (800-square-gm regions) obtained as described above are analyzed to calculate area ratios of unrecrystallized ferrite, ferrite, and martensite. By using the electron microscope, ferrite grains and martensite grains can be easily discriminated from surrounding microstructures. In addition, ferrite grains can be discriminated from unrecrystallized ferrite grains by calculating aspect ratios of grains from shapes of the grains, by recognizing ferrite grains having an aspect ratio of 4 or more as unrecrystallized ferrite grains, and by recognizing ferrite grains having an aspect ratio of less than 4 as ferrite grains.

(Average Grain Size of Ferrite: 0.5 $\mu$m to 5.0 $\mu$m)

By refining the metallographic microstructure after hardening, the strength, ductility, and impact resistance after hardening can be increased. The average grain size of the ferrite is set to 5.0 $\mu$m or less in order to secure good ductility and impact resistance while maintaining a tensile strength to 900 MPa or more. Since the average grain size of the ferrite is preferably as small as possible, it is not necessary to specify the lower limit of the average grain size of the ferrite. However, the substantial lower limit of the average grain size of the ferrite is about 0.5 $\mu$m in consideration of a manufacturing equipment capacity.

The hot-formed member according to this embodiment represents a member hot-formed from a base steel sheet, and includes, for example, a steel member formed by hot pressing. Representative hot-formed members include components for the body structure of an automobile such as a door guard bar and a bumper reinforcement, and hot-formed steel pipes for building construction.

3. Manufacturing Method

Next, a preferred method of manufacturing the hot-formed member according to this embodiment having the above-described features will be described. In the following description, the symbol "%" indicating the amount of each metallographic microstructure means "area%" unless specifically noted.

The configuration of the metallographic microstructure to be described below is the configuration at about 1/2t to 1/4t of a sheet thickness, and not in a central segregation portion. The central segregation portion may have a different metallographic microstructure from a representative metallographic microstructure of steel. However, the central segregation portion is a very small region with respect to the entire sheet thickness, and has little influence on the mechanical properties of the steel. That is, the metallographic microstructure of the central segregation portion does not represent the metallographic microstructure of the steel. Accordingly, the metallographic microstructure of the hot-formed member according to this embodiment is specified at about 1/2t to 1/4t of the sheet thickness and not in the central segregation portion.

In order to obtain a hot-formed member having a tensile strength of 900 MPa or more and having excellent ductility and impact resistance, a hot-formed member after hardening is required to have a metallographic microstructure (final metallographic microstructure) in which, in terms of area%, 10% to 90% of ferrite, 0% to 2.0% of unrecrystallized ferrite, and 10% to 90% of martensite are included, the total area ratio of the ferrite and the martensite is 90% or more, and the average grain size of the ferrite is 5.0 $\mu$m or less.

In this embodiment, in order to obtain such a final metallographic microstructure, the metallographic microstructure of a base steel sheet (also called "start steel sheet") before being subjected to hot press forming is previously adjusted to a predetermined state, and hot pressing is performed under predetermined hot press forming conditions.

3-1. In Case in Which Amount of Unrecrystallized Ferrite in Base steel sheet is 0 Area% to 2.0 Area%

In order to obtain a hot-formed member having the above-described metallographic microstructure, a steel sheet having the same chemical composition as that of the above-described hot-formed member and having a metallographic microstructure in which unrecrystallized ferrite is 0 area% to 2.0 area% and the average grain size of the ferrite is 0.5 $\mu$m to 7.0 $\mu$m is prepared as a base steel sheet. A base steel sheet in which the amount of unrecrystallized ferrite is 2.0 area% or less is obtained by, for example, performing a recrystallization annealing treatment on a steel sheet after cold rolling for a sufficient period of time. A cold-rolled steel sheet, a hot-dip galvanized cold-rolled steel sheet, and a galvannealed steel sheet having a metallographic microstructure in which unrecrystallized ferrite is 2.0 area% and the average grain size of ferrite is 0.5 $\mu$m to 7.0 $\mu$m can be manufactured by, for example, annealing a cold-rolled steel sheet in a temperature range of (Ac$_3$ temperature - 20°C) or higher.

The steel sheet for hot pressing prepared in this manner, which is a base steel sheet having the same chemical composition as that of the above-described hot-formed member and having a metallographic microstructure in which unrecrystallized ferrite is 2.0 area% or less and the average grain size of the ferrite is 0.5 $\mu$m to 7.0 $\mu$m, is subjected to hot press forming in accordance with the following conditions. Since the area ratio of the unrecrystallized ferrite of the base steel sheet is limited to 2.0 area% or less, the metallographic microstructure of the hot-formed member does not become a non-uniform microstructure. In addition to such an advantage, since the metallographic microstructure of the base steel sheet is a fine microstructure, the ductility and impact resistance of the hot-formed member can be significantly improved by the manufacturing method according to this embodiment. Although it is not necessary to specify the lower limit of the unrecrystallized ferrite, the unrecrystallized ferrite is preferably as small as possible, and thus the lower limit of the unrecrystallized ferrite is substantially 0%.

The area ratio of each metallographic microstructure of the above-described base steel sheet can be obtained through the same method as the method of obtaining an area ratio of each metallographic microstructure of the hot-formed member.

The base steel sheet prepared as described above is heated to a temperature range of 720°C to lower than the $Ac_3$ temperature in a heating process. Next, the temperature of this base steel sheet is maintained for 1 minute to 20 minutes in a temperature range of 720°C to lower than the $Ac_3$ temperature in a holding process, and then the steel sheet is hot-pressed in a hot forming process. Then, in a cooling process, the steel sheet is cooled under the conditions in which the average cooling rate is 20°C/sec to 500°C/sec in a temperature range of 600°C to 150°C. According to the manufacturing method according to this embodiment, the base steel sheet can be processed for a short period of time without being heated in an austenite single phase region.

(Metallographic Microstructure of Base steel sheet)

As the base steel sheet to be subjected to hot pressing, a cold-rolled steel sheet or a hot-dip galvanized cold-rolled steel sheet having the same chemical composition as that of the hot-formed steel sheet and having a metallographic microstructure in which unrecrystallized ferrite is 2.0 area% or less and the average grain size of the ferrite is 0.5 $\mu$m to 7.0 $\mu$m can be used.

According to this embodiment, the chemical composition of the base steel sheet is specified as described above, and particularly, C, Mn, and Ti are specified within specific ranges, respectively. Accordingly, the above-described base steel sheet can be easily obtained by sufficiently performing recrystallization annealing under normal conditions.

By hot-pressing the base steel sheet having the above-described metallographic microstructure under heat treatment conditions to be described later, a hot-formed member having a desired metallographic microstructure, a tensile strength of 900 MPa or more, and excellent ductility and impact resistance can be obtained.

As described already, the cold-rolled steel sheet and the hot-dip galvanized cold-rolled steel sheet having the above-described metallographic microstructure can be manufactured by, for example, annealing in a temperature range of ($Ac_3$ temperature - 20°C) or higher.

(Heating Temperature of Base steel sheet: Temperature Range of 720°C to Lower Than $Ac_3$ Temperature)

(Holding Temperature and Holding Time of Base steel sheet: Holding for 1 Minute to 20 Minutes in Temperature Range of 720°C to Lower Than $Ac_3$ Temperature)

In a process of heating the base steel sheet in the hot forming process, the base steel sheet is heated to a temperature range of 720°C to lower than the $Ac_3$ temperature (°C). In a process of holding the base steel sheet, the temperature of the base steel sheet is maintained for 1 minute to 20 minutes in the above-described temperature range, that is, in a temperature range of 720°C to lower than the $Ac_3$ temperature. The $Ac_3$ temperature is a temperature specified by the following Formula (i) obtained by an experiment, and in the case in which steel is heated in a temperature range of the $Ac_3$ temperature or higher, the metallographic microstructure of the steel is an austenite single phase.

$$Ac_3 = 910 - 203 \times (C^{0.5}) - 15.2 \times Ni + 44.7 \times Si + 104 \times V + 31.5 \times Mo - 30 \times$$

$$Mn - 11 \times Cr - 20 \times Cu + 700 \times P + 400 \times sol.\ Al + 50 \times Ti\ ....(i)$$

Here, the chemical symbol in the above formula indicates the amount (unit: mass%) of each element in the chemical composition of the steel sheet. "sol. Al" indicates a concentration (unit: mass%) of solid solution Al.

When the heating temperature in the heating process and the holding temperature in the holding process are lower than 720°C, the metallographic microstructure of the base steel sheet is a microstructure close to a ferrite single phase, and it is difficult to secure a tensile strength of 900 MPa or more after hardening. Accordingly, the heating temperature and the holding temperature are set to 720°C or higher. When the heating temperature in the heating process and the holding temperature in the holding process are equal to or higher than the $Ac_3$ temperature, the metallographic microstructure of the hot-formed member after hardening is a martensite single phase, and the ductility of the hot-formed member significantly deteriorates. Accordingly, the heating temperature and the holding temperature are lower than the $Ac_3$ temperature.

In addition, when the holding time in the holding process is shorter than 1 minute, undissolved carbide such as cementite remains in the hot-formed member, and the impact resistance of the hot-formed member deteriorates. Accordingly, the holding time is set to 1 minute or longer. On the other hand, when the holding time is longer than 20 minutes, productivity is reduced, and surface properties of the hot-formed member deteriorate due to the generation of scale and zinc-based oxide. Accordingly, the holding time is set to 20 minutes or shorter.

At this time, it is not particularly necessary to limit the average heating rate up to a temperature range of 720°C to the $Ac_3$ temperature in the heating process, but the rate is preferably set to 0.2°C/sec to 100°C/sec. By setting the average heating rate to 0.2°C/sec or higher, higher productivity can be secured. In addition, by setting the average heating rate to 100°C/sec or lower, the heating temperature is easily controlled in the case in which the heating is performed using a normal furnace. However, when using high-frequency heating or the like, it is possible to control the heating temperature with high accuracy even when the heating is performed at a heating rate of higher than 100°C/sec.

(Average Cooling Rate in Temperature Range of 600°C to 150°C: 20°C/sec to 500°C/sec)

The cooling in a temperature range of 600°C to 150°C is performed such that diffusive transformation does not occur. When the average cooling rate in the above temperature range is lower than 20°C/sec, bainitic transformation excessively proceeds, the area ratio of martensite that is a phase (strengthening phase) strengthening the strength of the hot-formed member cannot be secured, and thus it is difficult to secure a tensile strength of 900 MPa or more after hardening. Accordingly, the average cooling rate in the above temperature range is set to 20°C/sec or higher. It is difficult to increase the average cooling rate in the above temperature range to be higher than 500°C/sec using normal equipment. Accordingly, the average cooling rate in the above temperature range is set to 500°C/sec or lower. The average cooling rate in the above temperature range is preferably 200°C/sec or lower.

During the cooling, heat generation by phase transformation is very large in a temperature range of 600°C or lower. Accordingly, in a temperature range of 600°C or lower, a sufficient cooling rate may not be secured in the same cooling method as the cooling method in a temperature range of 600°C or higher. Therefore, it is necessary to strongly perform cooling from 600°C to 150°C compared to cooling to 600°C, and specifically, the cooling is preferably performed as described below.

In the hot pressing method, in general, cooling is achieved when a die having a room temperature or a temperature of about several tens of °C immediately before hot pressing takes heat from the hot-formed member. Accordingly, in order to change the cooling rate, a heat capacity of the die may be changed by changing a size of the die. In addition, the cooling rate can also be changed by changing the material of the die to dissimilar metal (for example, copper). In the case in which the size of the die cannot be changed, the cooling rate can also be changed by using a fluid cooling-type die and by changing the flow rate of a coolant. In addition, the cooling rate can also be changed by using a die in which several grooves are previously cut and by passing a coolant (water or gas) in the groove during pressing. In addition, the cooling rate can also be changed by separating a die from the hot-formed member by operating a press machine during pressing and by passing a coolant therebetween. Furthermore, the cooling rate can also be changed by changing the contact area between a die and the steel sheet (hot-formed member) by changing a clearance of the die. In view of the above facts, the following methods can be considered to be methods of changing the cooling rate at about 600°C.

(1) Immediately after reaching 600°C, the hot-formed member is moved to a die having a different heat capacity or a die in a room temperature state to change the cooling rate;
(2) In the case of a fluid cooling-type die, immediately after reaching 600°C, the flow rate of a coolant in the die is changed to change the cooling rate; and
(3) Immediately after reaching 600°C, a coolant is allowed to pass between a die and the member, and the flow rate thereof is changed to change the cooling rate.

3-2. In Case in Which Amount of Unrecrystallized Ferrite in Base steel sheet is More Than 2.0 Area%

In the case in which the amount of the unrecrystallized ferrite in the base steel sheet is 2.0 area% or less, a hot-formed member having a predetermined metallographic microstructure can be obtained through the above-described method. However, even when the amount of the unrecrystallized ferrite in the base steel sheet is more than 2.0 area%, a hot-formed member having a predetermined metallographic microstructure can be obtained through the following method.

In order to obtain a hot-formed member having the above-described metallographic microstructure, a steel sheet having the same chemical composition as that of the above-described hot-formed member and having a metallographic microstructure in which the average grain size of ferrite is 7.0 μm or less and the amount of unrecrystallized ferrite is more than 2.0 area% is prepared as a base steel sheet. A cold-rolled steel sheet, a hot-dip galvanized cold-rolled steel sheet, and a galvannealed steel sheet having a metallographic microstructure in which the average grain size of ferrite is 7.0 $\mu$m or less and the amount of unrecrystallized ferrite is more than 2.0 area% can be manufactured by, for example, annealing a cold-rolled steel sheet in a temperature range of lower than (Ac$_3$ temperature - 20°C). The base steel sheet prepared as described above is hot-pressed after being held for 30 seconds or longer and shorter than 20 minutes in a temperature range of the Ac$_3$ temperature to the Ac$_3$ temperature + 100°C, and is cooled at an average cooling rate of 3°C/sec to 20°C/sec in a temperature range of the Ac$_3$ temperature to 600°C.

(Metallographic Microstructure of Base Steel Sheet)

As the base steel sheet to be subjected to hot pressing, a cold-rolled steel sheet or a hot-dip galvanized cold-rolled steel sheet having the same chemical composition as that of the hot-formed member and having a metallographic microstructure in which the average grain size of ferrite is 7.0 $\mu$m or less and the amount of unrecrystallized ferrite is more than 2.0 area% can be used.

By hot-pressing the base steel sheet having the above-described metallographic microstructure under heat treatment conditions to be described later, a hot-formed member having a desired metallographic microstructure, a tensile strength of 900 MPa or more, and excellent ductility and impact resistance can be obtained.

(Heating Temperature of Base steel sheet: Temperature Range of AC$_3$ Temperature to Ac$_3$ Temperature + 100°C)

(Holding Temperature and Holding Time of Base steel sheet: Holding for 30 Seconds or Longer and Shorter Than 20 Minutes in Temperature Range of Ac$_3$ Temperature to Ac$_3$ Temperature + 100°C)

The steel sheet to be subjected to hot pressing is heated by being held for 30 seconds or longer and shorter than 20 minutes in a temperature range of the Ac$_3$ temperature (°C), which is specified by the above-described Experimental Formula (i), to the Ac$_3$ temperature + 100°C.

When the holding temperature is lower than the Ac$_3$ temperature, more than 2% of unrecrystallized ferrite remains in the hot-formed member, and the metallographic microstructure becomes non-uniform. Accordingly, the holding temperature is set to the Ac$_3$ temperature or higher. When the holding temperature is equal to or higher than the Ac$_3$ temperature + 100°C, intergranular oxide is generated in the metallographic microstructure, and the impact resistance of the hot-formed member significantly decreases. Accordingly, the holding temperature is set to the Ac$_3$ temperature + 100°C or lower.

In addition, when the holding time is shorter than 30 seconds, the strength of the base steel sheet largely scatters. Since conditions under which such a phenomenon occurs are not suitable for mass production, the holding time is set to 30 seconds or longer. On the other hand, when the holding time is 20 minutes or longer, austenite grains excessively grow, and the metallographic microstructure becomes non-uniform, and thus, the impact resistance of the hot-formed member significantly decreases. Accordingly, the holding time is set to be shorter than 20 minutes.

At this time, the heating rate up to a temperature range of the Ac$_3$ temperature to the Ac$_3$ temperature + 100°C is preferably 0.2°C/sec to 100°C/sec. By setting the average heating rate to 0.2°C/sec or higher, higher productivity can be secured. In addition, by setting the average heating rate to 100°C/sec or lower, the heating temperature is easily controlled in the case in which the heating is performed using a normal furnace. However, when using high-frequency heating or the like, it is possible to control the heating temperature with high accuracy even when the heating is performed at a heating rate of higher than 100°C/sec.

(Average Cooling Rate in Temperature Range of Ac$_3$ Temperature to 600°C: 3°C/sec to 20°C/sec)

The cooling in a temperature range of the Ac$_3$ temperature to 600°C is performed such that the average cooling rate is 3°C/sec to 20°C/sec. When the average cooling rate in the above temperature range is lower than 3°C/sec, intergranular oxide is generated in the metallographic microstructure, and the impact resistance of the hot-formed member significantly decreases. Accordingly, the average cooling rate in the above temperature range is set to 3°C/sec or higher. When the average cooling rate in the above temperature range is higher than 20°C/sec, the amount of ferrite in the hot-formed member is insufficient. Therefore, the average cooling rate in the above temperature range is set to 20°C/sec or lower. The average cooling rate in a temperature range of lower than 600°C is set to 20°C/sec to 500°C/sec.

In this embodiment, the aspect of the forming in the hot pressing method is not particularly limited. Examples of the aspect of the forming include bending, drawing, stretch forming, hole expansion forming, and flanging. A preferred form may be appropriately selected among the above-described forms of the forming in accordance with the kind and the shape of a target hot-formed member. Examples of the material of a base steel sheet to be subjected to the hot pressing method in this embodiment include a cold-rolled steel sheet, a hot-dip galvanized steel sheet, and a galvannealed steel sheet.

Representative examples of the hot-formed member include a door guard bar and a bumper reinforcement which are reinforcing components for an automobile. For example, in the case in which the hot-formed member is a bumper reinforcement, the above-described base steel sheet which is a galvannealed steel sheet having a predetermined length is prepared, and under the above-described conditions, working such as bending may be sequentially performed in a die.

The hot-formed member according to this embodiment is characterized by excellent ductility and excellent impact resistance. The hot-formed member according to this embodiment preferably has such ductility that a total elongation in a tension test is 10% or more. In addition, the hot-formed member according to this embodiment preferably has such impact resistance that an impact value in a Charpy test at 0°C is 20 J/cm$^2$ or more. The hot-formed member having such mechanical properties is realized by satisfying the above-described specifications related to the chemical composition and the metallographic microstructure.

After the hot forming such as hot pressing, a shot blasting treatment is generally performed on the hot-formed member for the purpose of removing scale. This shot blasting treatment is effective for introducing a compressive stress to a surface of a member to be treated. Accordingly, performing the shot blasting treatment on the hot-formed member has advantages in that delayed fracture is limited in the hot-formed member and the fatigue strength of the hot-formed member is improved.

In hot forming accompanied with pre-forming, for example, hot pressing, it is preferable that the base steel sheet is as soft as possible, and the base steel sheet has high ductility. For example, the tensile strength of the base steel sheet is desirably 800 MPa or less.

In the above description, the hot forming has been described using hot pressing which is a specific aspect thereof, but the manufacturing method according to this embodiment is not limited to the hot press forming. Similarly to hot pressing, the manufacturing method according to this embodiment can be applied to all hot forming processes having a means which cools a steel sheet simultaneously or immediately after forming. Examples of the hot forming include roll forming.

Examples

Examples of the present invention will be described.

Base steel sheets (sheet thickness t: 1.2 mm) having chemical compositions shown in Table 1 and metallographic microstructures and tensile strengths shown in Table 2, respectively, were subjected to hot pressing.

These base steel sheets are steel sheets (cold-rolled steel sheets in Table 2) manufactured by subjecting slabs manufactured in a laboratory to hot rolling, cold rolling, and recrystallization annealing. Using a plating simulator, some steel sheets were subjected to a hot dip galvanizing treatment (plating adhesion amount per side: 60 g/m$^2$) and an galvannealed treatment (plating adhesion amount per side: 60 g/m$^2$, Fe content in coating film: 15 mass%). These are hot-dip galvanized cold-rolled steel sheets and galvannealed steel sheets in Table 2. Steel sheets as cold-rolled, and not subjected to recrystallization annealing (full hard in Table 2), were also used as base steel sheets.

These steel sheets were cut into sizes of a thickness of 1.2 mm, a width of 100 mm, and a length of 200 mm, and heated and cooled under conditions in Table 3. A thermocouple was adhered to the steel sheet, and a cooling rate was also measured. The "average heating rate" in Table 3 indicates an average of heating rates in a temperature range of a room temperature to 720°C. The "holding time" in Table 3 indicates a period of time in which the steel is held in a temperature range of 720°C or higher. The "cooling rate *1" in Table 3 indicates an average cooling rate from an Ac$_3$ temperature to 600°C in the case in which the heating temperature is the Ac$_3$ temperature or higher, and indicates an average cooling rate from the heating temperature to 600°C in the case in which the heating temperature is lower than the Ac$_3$ temperature. The "cooling rate *2" is an average cooling rate in a temperature range of 600°C to 150°C. The steel sheets obtained under the various manufacturing conditions were subjected to a tensile test, a Charpy test, and metallographic microstructure observation. The steel sheet members prepared in this example are not subjected to hot pressing by a die, but undergo the same thermal history as a hot-formed member. Therefore, the steel sheets have substantially the same mechanical properties as the hot-formed member having the same thermal history.

(Tensile Test)

A JIS No. 5 tensile test piece of which the longitudinal direction was perpendicular to a rolling direction was prepared from each steel sheet, and a tensile strength (TS) and a total elongation (EL) were measured. Samples having a TS of 900 MPa or more and an EL of 10% or more were determined to be accepted.

(Impact Resistance)

Four steel sheets having a thickness of 1.2 mm were laminated and threadably mounted, and then V-notch test pieces were prepared and subjected to a Charpy impact test.

The impact resistance was evaluated as "good" in the case in which the impact value at 0°C was 20 J/cm$^2$ or higher. In the case in which the impact value at 0°C does not reach 20 J/cm$^2$, it was evaluated as "poor".

(Area Ratios of Ferrite, Unrecrystallized Ferrite, and Martensite, and Average Grain Size of Ferrite)

Test pieces were prepared from the base steel sheets and the heat-treated steel sheets in a rolling direction of the base steel sheet and the heat-treated steel sheet and in a direction perpendicular to the rolling direction. Next, metallographic microstructures of a cross-section in the rolling direction and a cross-section perpendicular to the rolling direction in the test piece were photographed by an electron microscope. Electron micrographs of regions of 800 $\mu$m x 800 $\mu$m obtained as described above were analyzed to calculate area ratios of unrecrystallized ferrite, ferrite, and martensite.

(Description of Test Results)

Results of these tests are shown in Tables 4 and 5.

In Tables 1 to 5, underlined numerical values indicate that the amount, conditions, or mechanical properties shown by the numerical value are out of the range of the present invention.

Sample Nos. 1,2,4 to 7, 11, 15, 16, 19, 21 to 23, 25, 27, 29, 31, 33, 36, 37, and 39, which are invention examples, have excellent ductility and impact resistance.

Sample No. 3 had poor ductility and poor impact resistance since the average grain size of ferrite of the base steel sheet was out of the range specified in the present invention. Sample No. 13 had poor ductility and poor impact resistance since the manufacturing method specified in the present invention was not applied. Sample No. 14 had poor ductility since the manufacturing method specified in the present invention was not applied. Sample Nos. 9 and 26 had poor impact resistance since the chemical composition was out of the range specified in the present invention. Sample Nos. 10 and 17 could not obtain a target tensile strength since the manufacturing conditions were out of the range specified in the present invention, and thus a desired microstructure could not be obtained.

Sample No. 18 had poor ductility since the manufacturing conditions were out of the range specified in the present invention, and thus a desired microstructure could not be obtained.

Sample Nos. 28 and 32 could not obtain a target tensile strength since the chemical composition was out of the range specified in the present invention.

Sample No. 34 had poor ductility since the chemical composition was out of the range specified in the present invention, and thus a desired microstructure could not be obtained.

Sample No. 8 had poor ductility since the heating temperature was higher than the Ac$_3$ temperature. Sample No. 12 could not obtain a target tensile strength since the heating temperature was lower than 720°C. In Sample No. 20, surface scale was generated beyond the allowable extent since the holding time was out of the range specified in the present invention. Sample No. 30 could not obtain target impact resistance since the holding time at 750°C or higher was out of the range specified in the present invention. In Sample No. 24, a total area ratio of ferrite and martensite of the hot-formed member was out of the range specified in the present invention, and the tensile strength was insufficient since the cooling rate at a temperature lower than 600°C was out of the range specified in the present invention. In Sample No. 35, surface scale was generated beyond the allowable extent since the Si content was out of the range specified in the present invention. In Sample No. 38, surface scale was generated beyond the allowable extent since the Al content was out of the range specified in the present invention. Sample No. 40 had poor impact resistance since the Ti content was out of the range specified in the present invention.

[Table 1]

| Steel | Chemical Composition (Unit: mass%, balance: Fe and Impurities) | | | | | | | | | Ac$_3$ |
|---|---|---|---|---|---|---|---|---|---|---|
| | C | Si | Mn | P | S | sol. Al | Ti | N | Other Elements | (°C) |
| A | 0.20 | 0.25 | 1.40 | 0.009 | 0.0011 | 0,031 | 9.097 | 0.004 | Zr=0.001 | 812 |
| B | 0.14 | 0.08 | 1.35 | 0.015 | 0.0012 | 0.041 | 0.062 | 0.004 | | 827 |
| C | 0.15 | 0.10 | 2.02 | 0.009 | 0.0011 | 0.031 | 0.097 | 0.004 | | 799 |
| D | 0.15 | 0.10 | 2.43 | 0.011 | 0.0012 | 0.029 | 0.103 | 0.004 | REM=0.001 | 787 |
| E | 0.13 | 0.12 | 3.21 | 0.010 | 0.0012 | 0.030 | 0.097 | 0.004 | | 770 |
| F | 0.12 | 0.09 | 1.59 | 0.011 | 0.0013 | 0.037 | 0.183 | 0.003 | | 828 |

(continued)

| Steel | Chemical Composition (Unit: mass%, balance: Fe and Impurities) | | | | | | | | | Ac₃ |
|---|---|---|---|---|---|---|---|---|---|---|
| | C | Si | Mn | P | S | sol. Al | Ti | N | Other Elements | (°C) |
| G | 0.15 | 1.12 | 1.53 | 0.010 | 0.0010 | 0.032 | 0.100 | 0.004 | Bi=0.004 | 860 |
| H | 0.15 | 0.09 | 1.57 | 0.012 | 0.0012 | 0.027 | 0.098 | 0.004 | | 812 |
| I | 0.11 | 1.17 | 2.00 | 0.010 | 0.0011 | 0.032 | 0.099 | 0.003 | | 860 |
| J | 0.14 | 1.15 | 1.51 | 0.009 | 0.0013 | 0.032 | 0.102 | 0.003 | | 864 |
| K | 0.15 | 1.12 | 1.23 | 0.013 | 0.0014 | 0.032 | 0.102 | 0.003 | Cr=0.31, Mo=0.11 | 872 |
| L | 0.45 | 1.33 | 1.12 | 0.013 | 0.0010 | 0.032 | 0.098 | 0.004 | | 826 |
| M | 0.14 | 1.18 | 1.99 | 0.012 | 0.0013 | 0.0034 | 0.074 | 0.004 | Nb=0.045, B=0.001 | 853 |
| N | 0.08 | 0.07 | 1.63 | 0.011 | 0.0009 | 0.034 | 0.080 | 0.004 | | 832 |
| O | 0.14 | 1.14 | 2.03 | 0.014 | 0.0009 | 0.031 | 0.099 | 0.003 | | 851 |
| P | 0.15 | 0.24 | 1.28 | 0.011 | 0.0011 | 0.025 | 0,096 | 0.004 | Cu=0.12, Ni=0.45, Ca=0.001 | 817 |
| Q | 0.18 | 0.12 | 0.82 | 0.012 | 0.0014 | 0.032 | 0.095 | 0.004 | | 830 |
| R | 0.11 | 1.19 | 1.98 | 0.010 | 0.0010 | 0.032 | 0.081 | 0.003 | V=0,022, Mg=0.001 | 862 |
| S | 0.13 | 0.14 | 1.62 | 0.013 | 0,0011 | 0.036 | 0.018 | 0.004 | | 819 |
| I | 0.14 | 2.12 | 2.35 | 0.012 | 0.0010 | 0.032 | 0.085 | 0.004 | | 884 |
| U | 0.11 | 1.67 | 2.85 | 0.011 | 0.0009 | 0.034 | 0.094 | 0.005 | | 858 |
| V | 0.14 | 0.10 | 2.44 | 0.010 | 0.0011 | 0.790 | 0.074 | 0,003 | | 1092 |
| W | 0.15 | 0.13 | 1.89 | 0.009 | 0.0012 | 1.190 | 0.068 | 0,004 | | 1266 |
| X | 0.12 | 1.02 | 2.43 | 0.011 | 0.0009 | 0.032 | 0.260 | 0.003 | | 846 |
| Y | 0.14 | 0.54 | 2.37 | 0.013 | 0.0010 | 0.031 | 0.330 | 0.005 | | 825 |

[Table 2]

| Sample No. | Steel | Base steel sheet | | | |
|---|---|---|---|---|---|
| | | Type of Steel Sheet | TS | Area Ratio of Unrecrystallized Ferrite (%) | Average Grain Size of Ferrite |
| | | | (MPa) | | (μm) |
| 1 | A | Cold-Rolled Steel Sheet | 786 | 0 | 3.8 |
| 2 | A | Cold-Rolled Steel Sheet | 786 | 0 | 3.8 |
| 3 | B | Cold-Rolled Steel Sheet | 695 | 0 | 10.7 |
| 4 | C | Hot-Dip Galvanized Steel Sheet | 867 | 1.2 | 2.4 |
| 5 | C | Galvannealed Steel Sheet | 785 | 0 | 3.9 |
| 6 | C | Galvannealed Steel Sheet | 785 | 0 | 3.9 |
| 7 | D | Galvannealed Steel Sheet | 824 | 0 | 4.1 |

(continued)

| Sample No. | Steel | Base steel sheet | | | |
| --- | --- | --- | --- | --- | --- |
| | | Type of Steel Sheet | TS | Area Ratio of Unrecrystallized Ferrite (%) | Average Grain Size of Ferrite |
| | | | (MPa) | | (μm) |
| 8 | D | Galvannealed Steel Sheet | 824 | 0 | 4.1 |
| 9 | E | Cold-Rolled Steel Sheet | 1028 | 0 | 2.5 |
| 10 | F | Cold-Rolled Steel Sheet | 752 | 0 | 4.2 |
| 11 | G | Hot-Dip Galvanized Steel Sheet | 792 | 0 | 4.2 |
| 12 | G | Hot-Dip Galvanized Steel Sheet | 792 | 0 | 4.2 |
| 13 | H | Full Hard | 1225 | 100 | * |
| 14 | H | Cold-Rolled Steel Sheet | 964 | 5.3 | 2.1 |
| 15 | H | Cold-Rolled Steel Sheet | 964 | 5.3 | 2.1 |
| 16 | H | Cold-Rolled Steel Sheet | 682 | 0 | 3.8 |
| 17 | H | Cold-Rolled Steel Sheet | 682 | 0 | 3.8 |
| 18 | H | Cold-Rolled Steel Sheet | 682 | 0 | 3.8 |
| 19 | I | Cold-Rolled Steel Sheet | 754 | 0 | 3.8 |
| 20 | I | Cold-Rolled Steel Sheet | 754 | 0 | 3.8 |
| 21 | I | Galvannealed Steel Sheet | 749 | 0 | 4.1 |
| 22 | I | Galvannealed Steel Sheet | 749 | 0 | 4.1 |
| 23 | J | Cold-Rolled Steel Sheet | 786 | 0 | 4.2 |
| 24 | J | Cold-Rolled Steel Sheet | 786 | 0 | 4.2 |
| 25 | K | Hot-Dip Galvanized Steel Sheet | 795 | 0 | 4.2 |
| 26 | L | Cold-Rolled Steel Sheet | 726 | 0 | 3.5 |
| 27 | M | Cold-Rolled Steel Sheet | 793 | 0 | 4.3 |
| 28 | N | Cold-Rolled Steel Sheet | 702 | 0 | 4.2 |

(continued)

| Sample No. | Steel | Base steel sheet | | | |
|---|---|---|---|---|---|
| | | Type of Steel Sheet | TS | Area Ratio of Unrecrystallized Ferrite (%) | Average Grain Size of Ferrite |
| | | | (MPa) | | (μm) |
| 29 | O | Galvannealed Steel Sheet | 779 | 0 | 3.6 |
| 30 | O | Galvannealed Steel Sheet | 779 | 0 | 3.6 |
| 31 | P | Cold-Rolled Steel Sheet | 758 | 0 | 4.5 |
| 32 | Q | Cold-Rolled Steel Sheet | 684 | 0 | 6.2 |
| 33 | R | Cold-Rolled Steel Sheet | 745 | 0 | 3.9 |
| 34 | S | Cold-Rolled Steel Sheet | 621 | 0 | 6.8 |
| 35 | T | Cold-Rolled Steel Sheet | 923 | 0 | 3.9 |
| 36 | U | Cold-Rolled Steel Sheet | 874 | 0 | 4.1 |
| 37 | V | Cold-Rolled Steel Sheet | 753 | 0 | 4.6 |
| 38 | W | Cold-Rolled Steel Sheet | 746 | 0 | 4.8 |
| 39 | X | Cold-Rolled Steel Sheet | 906 | 0 | 2.2 |
| 40 | Y | Cold-Rolled Steel Sheet | 902 | 0 | 2.9 |
| *: The steel structure after cold rolling. | | | | | |

Accordingly, it was not possible to measure the grain size of ferrite.

[Table 3]

| Sample No. | Steel | $Ac_s$ | Average Heating Rate | Heating Temperature | Holding Time | Cooling Rate *1 | Cooling Rate *2 |
|---|---|---|---|---|---|---|---|
| | | | (*C/s | (*C) | (minutes) | (*C/s) | (*C/s) |
| 1 | A | 812 | 12 | 750 | 10 | 70 | 70 |
| 2 | A | 812 | 11 | 800 | 10 | 90 | 90 |
| 3 | B | 827 | 11 | 800 | 10 | 90 | 90 |
| 4 | C | 799 | 10 | 780 | 10 | 50 | 50 |
| 5 | C | 799 | 12 | 750 | 10 | 80 | 80 |
| 6 | C | 799 | 10 | 780 | 10 | 90 | 90 |
| 7 | D | 787 | 10 | 750 | 10 | 80 | 80 |
| 8 | D | 787 | 10 | 800 | 16 | 80 | 80 |

(continued)

| Sample No. | Steel | $Ac_s$ | Average Heating Rate | Heating Temperature | Holding Time | Cooling Rate *1 | Cooling Rate *2 |
|---|---|---|---|---|---|---|---|
| | | | (*C/s | (*C) | (minutes) | (*C/s) | (*C/s) |
| 9 | E | 770 | 12 | 740 | 10 | 40 | 40 |
| 10 | F | 828 | 10 | 650 | 10 | 80 | 80 |
| 11 | G | 860 | 12 | 760 | 1.5 | 70 | 70 |
| 12 | G | 860 | 12 | 710 | 10 | 80 | 80 |
| 1.3 | H | 812 | 10 | 750 | 10 | 15 | 60 |
| 14 | H | 812 | 8 | 890 | 10 | 80 | 80 |
| 15 | H | 812 | 10 | 820 | 3 | 15 | 40 |
| 16 | H | 812 | 10 | 750 | 10 | 90 | 90 |
| 17 | H | 812 | 9 | 750 | 10 | 10 | 10 |
| 18 | H | 812 | 11 | 900 | 10 | 80 | 80 |
| 19 | I | 860 | 9 | 750 | 10 | 70 | 70 |
| 20 | I | 860 | 9 | 750 | 24 | 70 | 70 |
| 21 | I | 860 | 11 | 780 | 10 | 80 | 80 |
| 22 | I | 860 | 10 | 800 | 18 | 60 | 60 |
| 23 | J | 864 | 11 | 750 | 10 | 60 | 60 |
| 24 | J | 864 | 10 | 750 | 10 | 15 | 15 |
| 25 | K | 872 | 9 | 800 | 10 | 80 | 80 |
| 26 | L | 826 | 12 | 740 | 10 | 60 | 60 |
| 27 | M | 853 | 12 | 800 | 10 | 60 | 60 |
| 28 | N | 832 | 10 | 800 | 10 | 50 | 50 |
| 29 | O | 851 | 10 | 750 | 10 | 80 | 80 |
| 30 | O | 851 | 11 | 750 | 0.5 | 80 | 80 |
| 31 | P | 817 | 11 | 800 | 10 | 80 | 80 |
| 32 | Q | 830 | 11 | 750 | 10 | 50 | 50 |
| 33 | R | 862 | 11 | 800 | 10 | 70 | 70 |
| 34 | 8 | 819 | 10 | 800 | 10 | 60 | 60 |
| 35 | I | 884 | 11 | 800 | 10 | 70 | 70 |
| 36 | U | 858 | 10 | 790 | 10 | 70 | 70 |
| 37 | V | 1092 | 10 | 820 | 10 | 60 | 60 |
| 38 | W | 1266 | 12 | 830 | 10 | 80 | 80 |
| 39 | X | 846 | 10 | 810 | 10 | 90 | 90 |
| 40 | Y | 825 | 11 | 800 | 10 | 90 | 90 |
| *1: The average cooling rate from the $Ac_3$ point to 600°C, and when the heating temperature is. lower than the $Ac_3$ point, *2: The average cooling rate at a temperature lower than 600°C | | | | | | | |

[Table 4]

| Sample No. | Steel | Hot-Formed Member | | | | | |
|---|---|---|---|---|---|---|---|
| | | Area Ratio of Ferrite | Area Ratio of Martensite | Total Area Ratio of Ferrite and Martensite | Area Ratio of Unracrystallized Ferrite | Other Structures | Average Grain Size of Ferrite |
| | | (%) | (%) | (%) | | | (μm) |
| 1 | A | 65 | 35 | 100 | 0 | | 3.6 |
| 2 | A | 32 | 68 | 100 | 0 | | 3.2 |
| 3 | B | 34 | 66 | 100 | 0 | | 6.8 |
| 4 | C | 52 | 47 | 99 | 1 | | 3.2 |
| 5 | C | 43 | 57 | 100 | 0 | | 3.5 |
| 6 | C | 54 | 46 | 100 | 0 | | 2.8 |
| 7 | D | 47 | 53 | 100 | 0 | | 1.8 |
| 8 | D | 0 | 100 | 100 | 0 | | *1 |
| 9 | E | 35 | 65 | 100 | 0 | | 1.9 |
| 10 | F | 93 | 6 | 99 | 0 | Cementite | 4.8 |
| 11 | G | 73 | 27 | 100 | 0 | | 4.5 |
| 12 | G | 91 | 8 | 99 | 0 | Cementite | 4.8 |
| 13 | H | 41 | 24 | 65 | 35 | | 4.2 |
| 14 | H | 2 | 93 | 100 | 0 | | 4.2 |
| 15 | H | 35 | 65 | 100 | 0 | | 2.8 |
| 16 | H | 72 | 28 | 100 | 0 | | 4.5 |
| 17 | H | 74 | 6 | 80 | 0 | Bainite | 4.7 |
| 18 | H | 0 | 100 | 100 | 0 | | *1 |
| 19 | I | 82 | 18 | 100 | 0 | | 4.2 |
| 20 | I | 77 | 23 | 100 | 0 | | 4.5 |
| 21 | I | 71 | 29 | 100 | 0 | | 3.8 |
| 22 | I | 64 | 36 | 100 | 0 | | 3.3 |
| 23 | J | 75 | 25 | 100 | 0 | | 4.7 |
| 24 | J | 70 | 15 | 85 | 0 | Bainite | 4.4 |
| 25 | K | 68 | 32 | 100 | 0 | | 4.2 |
| 26 | L | 66 | 34 | 100 | 0 | | 3.8 |
| 27 | M | 46 | 54 | 100 | 0 | | 3.9 |
| 28 | N | 79 | 8 | 87 | 0 | Bainite | 4.1 |
| 29 | O | 69 | 31 | 100 | 0 | | 3.5 |
| 30 | O | 74 | 25 | 99 | 0 | Cementite | 3.7 |
| 31 | P | 62 | 38 | 100 | 0 | | 3.9 |
| 32 | O | 86 | 8 | 94 | 0 | Bainite | 4.9 |
| 33 | R | 65 | 35 | 100 | 0 | | 3.6 |
| 34 | S | 36 | 64 | 100 | 0 | | 8.2 |

(continued)

| Sample No. | Steel | Hot-Formed Member | | | | | |
|---|---|---|---|---|---|---|---|
| | | Area Ratio of Ferrite | Area Ratio of Martensite | Total Area Ratio of Ferrite and Martensite | Area Ratio of Unracrystallized Ferrite | Other Structures | Average Grain Size of Ferrite |
| | | (%) | (%) | (%) | | | (μm) |
| 35 | T | 63 | 37 | 100 | 0 | | 4.1 |
| 36 | U | 59 | 41 | 100 | 0 | | 3.9 |
| 37 | V | 72 | 28 | 100 | 0 | | 4.2 |
| 38 | W | 74 | 26 | 100 | 0 | | 4.6 |
| 39 | X | 64 | 36 | 100 | 0 | | 2.4 |
| 40 | Y | 72 | 28 | 100 | 0 | | 2.6 |

*1: Since the structure is a martensite single phase structure, it was not possible to measure the grain size of ferrite.

[Table 5]

| Sample No. | Steel | Hot-Formed Member | | | Remarks |
|---|---|---|---|---|---|
| | | TS(MPa) | EL (%) | Impact Resistance | |
| 1 | A | 1062 | 14.5 | Good | Invention Example |
| 2 | A | 1329 | 11.8 | Good | Invention Example |
| 3 | B | 1054 | 8.6 | Poor | Comparative Example |
| 4 | C | 1074 | 11.6 | Good | Invention Example |
| 5 | C | 1008 | 14.2 | Good | Invention Example |
| 6 | C | 1088 | 15.2 | Good | Invention Example |
| 7 | D | 1112 | 12.2 | Good | Invention Example |
| 8 | D | 1223 | 6.2 | Good | Comparative Example |
| 9 | E | 1217 | 13.9 | Poor | Comparative Example |
| 10 | F | 794 | 20.1 | Good | Comparative Example |
| 11 | G | 907 | 18.4 | Good | Invention Example |
| 12 | G | 758 | 20.6 | Good | Comparative Example |
| 13 | H | 1106 | 5.7 | Poor | Comparative Example |
| 14 | H | 1286 | 6.2 | Good | Comparative Example |
| 15 | H | 1104 | 14.5 | Good | Invention Example |
| 16 | H | 928 | 13.8 | Good | Invention Example |
| 17 | H | 846 | 12.9 | Good | Comparative Example |
| 18 | H | 1349 | 5.4 | Good | Comparative Example |
| 19 | I | 904 | 18.6 | Good | Invention Example |
| 20 | I | 908 | 20.4 | Good | Comparative Example *2 |
| 21 | I | 942 | 20.2 | Good | Invention Example |
| 22 | I | 985 | 15.9 | Good | Invention Example |
| 23 | J | 904 | 19.3 | Good | Invention Example |

(continued)

| Sample No. | Steel | Hot-Formed Member | | | Remarks |
|---|---|---|---|---|---|
| | | TS(MPa) | EL (%) | Impact Resistance | |
| 24 | J | <u>854</u> | 19.7 | Good | Comparative Examples |
| 25 | K | 1011 | 13.8 | Good | Invention Example |
| 26 | <u>L</u> | 1025 | 22.4 | <u>Poor</u> | Comparative Example |
| 27 | M | 1242 | 13.2 | Good | Invention Example |
| 28 | <u>N</u> | <u>746</u> | 24.9 | Good | Comparative Example |
| 29 | O | 1049 | 16.0 | Good | Invention Example |
| 30 | O | 963 | 15.8 | <u>Poor</u> | Comparative Example |
| 31 | P | 932 | 15.2 | Good | Invention Example |
| 32 | <u>O</u> | <u>846</u> | 21.4 | Good | Comparative Example |
| 33 | R | 1048 | 13.9 | Good | Invention Example |
| 34 | <u>S</u> | 1123 | <u>9.2</u> | Good | Comparative Example |
| 35 | <u>T</u> | 1026 | 14.9 | Good | Comparative Example *2 |
| 36 | U | 1131 | 13.2 | Good | Invention Example |
| 37 | V | 946 | 16.6 | Good | Invention Example |
| 38 | <u>W</u> | 932 | 16.4 | Good | Comparative Example *2 |
| 39 | x | 976 | 14.5 | Good | Invention Example |
| 40 | <u>Y</u> | 1003 | 13.7 | <u>Poor</u> | Comparative Example |
| *2: It was not possible to peel scale. | | | | | |

## Claims

1. A hot-formed member having a chemical composition comprising, by mass%:

0.10% to 0.40% of C;
0% to 2.0% of Si;
1.0% to 3.0% of Mn;
0.05% or less ofP;
0.01% or less of S;
0.001% to 1.0% of sol. Al;
0.050% to 0.30% of Ti;
0.01% or less of N;
0% to 0.4% of Nb;
0% to 0.4% of V;
0% to 1.0% of Cr;
0% to 1.0% of Mo;
0% to 1.0% of Cu;
0% to 1.0% of Ni;
0% to 0.01% of Ca;
0% to 0.01% of Mg;
0% to 0.01% of REM;
0% to 0.01% of Zr;
0% to 0.01% of B;
0% to 0.01% of Bi; and
the balance of Fe and impurities,

wherein the hot-formed member has a metallographic microstructure which has, in terms of area%, 10% to 90% of a ferrite, 0% to 2.0% of an unrecrystallized ferrite, 10% to 90% of a martensite, in which a total area ratio of the ferrite and the martensite is 90% to 100%, and in which an average grain size of the ferrite is 0.5 $\mu$m to 5.0 $\mu$m; and a tensile strength is 900 MPa to 1800 MPa.

2. The hot-formed member according to claim 1,
   wherein the chemical composition contains, by mass%, one or two or more selected from the group consisting of 0.003% to 0.4% of Nb, 0.003% to 0.4% of V, 0.005% to 1.0% of Cr, 0.005% to 1.0% of Mo, 0.005% to 1.0% of Cu, and 0.005% to 1.0% of Ni.

3. The hot-formed member according to claim 1 or 2,
   wherein the chemical composition contains, by mass%, one or two or more selected from the group consisting of 0.0003% to 0.01% of Ca, 0.0003% to 0.01% of Mg, 0.0003% to 0.01% of REM, and 0.0003% to 0.01% of Zr.

4. The hot-formed member according to any one of claims 1 to 3,
   wherein the chemical composition contains, by mass%, 0.0003% to 0.01% of B.

5. The hot-formed member according to any one of claims 1 to 4,
   wherein the chemical composition contains, by mass%, 0.0003% to 0.01% of Bi.

6. A method of manufacturing a hot-formed member including:

   heating a base steel sheet having the same chemical composition as that of the hot-formed member according to any one of claims 1 to 5 and a metallographic microstructure in which the amount of an unrecrystallized ferrite is 0 area% to 2.0 area% and an average grain size of a ferrite is 0.5 $\mu$m to 7.0 $\mu$m to a temperature range of 720°C to lower than an $Ac_3$ temperature;
   then maintaining a temperature of the base steel sheet for 1 minute to 20 minutes in the temperature range of 720°C to lower than the $Ac_3$ temperature;
   then hot-forming the base steel sheet; and
   then cooling the base steel sheet under conditions in which an average cooling rate is 20°C/sec to 500°C/sec in a temperature range of 600°C to 150°C.

7. A method of manufacturing a hot-formed member including:

   heating a base steel sheet having the same chemical composition as that of the hot-formed member according to any one of claims 1 to 5 and a metallographic microstructure in which an unrecrystallized ferrite is more than 2.0 area% and an average grain size of a ferrite is 0.5 $\mu$m to 7.0 $\mu$m to a temperature range of an $Ac_3$ temperature to the $Ac_3$ temperature + 100°C;
   then maintaining a temperature of the base steel sheet for 30 seconds or longer and shorter than 20 minutes in the temperature range of the $Ac_3$ temperature to the $Ac_3$ temperature + 100°C;
   then hot-forming the base steel sheet; and
   then cooling the base steel sheet under conditions in which an average cooling rate is 3°C/sec to 20°C/sec in a temperature range of the $Ac_3$ temperature to 600°C.

8. The method of manufacturing a hot-formed member according to claim 6 or 7,
   wherein the base steel sheet is one selected from the group consisting of a cold-rolled steel sheet, a hot-dip galvanized steel sheet, and a galvannealed steel sheet.

FIG. 1

BASE STEEL SHEET

↓

HEATING — HEATING STEP

↓

MAINTAINING TEMPERATURE — HOLDING STEP

↓

HOT PRESSING (HOT FORMING) — HOT FORMING STEP

↓

COOLING — COOLING STEP

↓

HOT-FORMED MEMBER

## INTERNATIONAL SEARCH REPORT

| International application No. |
|---|
| PCT/JP2014/050019 |

**A. CLASSIFICATION OF SUBJECT MATTER**

*C22C38/00*(2006.01)i, *B21D22/20*(2006.01)i, *C21D1/18*(2006.01)i, *C21D9/00* (2006.01)i, *C22C38/58*(2006.01)i

According to International Patent Classification (IPC) or to both national classification and IPC

**B. FIELDS SEARCHED**

Minimum documentation searched (classification system followed by classification symbols)
C22C1/00-49/14, B21D22/20, C21D1/18, C21D9/00

Documentation searched other than minimum documentation to the extent that such documents are included in the fields searched

| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-65293 A  (JFE Steel Corp.), | 1-4 |
| Y | 25 March 2010 (25.03.2010), | 5 |
| A | claims; tables 1, 2 | 6-8 |
|  | (Family: none) | |
| X | JP 2010-65295 A  (JFE Steel Corp.), | 1-4 |
| Y | 25 March 2010 (25.03.2010), | 5 |
| A | claims; tables 1, 2 | 6-8 |
|  | (Family: none) | |
| Y | JP 2012-82499 A  (Sumitomo Metal Industries, Ltd.), 26 April 2012 (26.04.2012), claims; paragraph [0037] (Family: none) | 5 |

☒ Further documents are listed in the continuation of Box C. ☐ See patent family annex.

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 25 March, 2014 (25.03.14) | 08 April, 2014 (08.04.14) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2014/050019

C (Continuation). DOCUMENTS CONSIDERED TO BE RELEVANT

| Category* | Citation of document, with indication, where appropriate, of the relevant passages | Relevant to claim No. |
|---|---|---|
| E,X | JP 2014-19894 A (Nippon Steel & Sumitomo Metal Corp.), 03 February 2014 (03.02.2014), claims; tables 1 to 4 (Family: none) | 1-6,8 |
| E,A | JP 2014-5521 A (Nippon Steel & Sumitomo Metal Corp.), 16 January 2014 (16.01.2014), (Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1490535 A
- JP H1096031 B
- JP 2010521584 PCT
- JP 2010131672 A
- JP 2010065293 A
- JP 2010065292 A
- JP 2010065295 A